# EUROPEAN PATENT APPLICATION

(11) **EP 4 768 296 A1**
(43) Date of publication of application: **01.07.2026**
(21) Application number: 25225679.7
(22) Date of filing: 19.12.2025
(51) Int. Cl.: B60K 35/29, B60K 35/60, B60K 35/81

(54) **IN-VEHICLE SYSTEM, VEHICLE, INFORMATION PROCESSING APPARATUS, INFORMATION PROCESSING METHOD, AND PROGRAM**

(30) Priority: 27.12.2024 JP 2024231984
(71) Applicant: Toyota Jidosha Kabushiki Kaisha, Toyota-shi, Aichi-ken 471-8571 (JP)
(72) Inventor: TANAKA, Seiichi, Toyota-shi, 471-8571 (JP); FUJIWARA, Tatsuro, Toyota-shi, 471-8571 (JP); TSUJINO, Miki, Toyota-shi, 471-8571 (JP); ONISHI, Kanta, Toyota-shi, 471-8571 (JP); KOBATAKE, Yasuhiro, Toyota-shi, 471-8571 (JP); YOKOYAMA, Yuu, Toyota-shi, 471-8571 (JP)
(74) Representative: D Young & Co LLP

(57) **Abstract**

An in-vehicle system comprises a first display device that displays an operation interface for making a predetermined request to a device mounted on a vehicle (1), and a second display device. The in-vehicle system has a storage and a processor. The storage stores content of a request made via the operation interface and a first graphic (40) that is a graphic to be output at the first display device in response to the request in association with each other. In a case where the request is made to the device mounted on the vehicle via the operation interface displayed at the first display device, the processor configured to execute outputting at the first display device and the second display device, animation in which the first graphic (40) corresponding to the request moves from the first display device to the second display device.

## Description

### BACKGROUND

### Technical Field

The present disclosure relates to a vehicle technique.

### Description of the Related Art

There is a technique of providing information for reducing burden of a driver who drives an automobile. In association with this, for example, Japanese Patent Laid-Open No. 2023-043728 discloses an in-vehicle system in which a display for providing information is arranged in the vicinity of a steering wheel.

### SUMMARY

The present disclosure is directed to presenting display regarding operation performed by a user in a manner easily visible to the user.

One aspect of the present disclosure is an in-vehicle system including a first display device that displays an operation interface for making a predetermined request to a device mounted on a vehicle, and a second display device, the in-vehicle system comprising:
a storage configured to store content of a request made via the operation interface and a first graphic that is a graphic to be output at the first display device in response to the request in association with each other; and
a processor configured to execute,
in a case where a request is made to the device mounted on the vehicle via the operation interface displayed at the first display device,
outputting at the first display device and the second display device, animation in which the first graphic corresponding to the request moves from the first display device to the second display device.

One aspect of the present disclosure is an information processing apparatus included in an in-vehicle system including a first display device that displays an operation interface for making a predetermined request to a device mounted on a vehicle, and a second display device, the information processing apparatus comprising:
a storage configured to store content of a request made via the operation interface and a first graphic that is a graphic to be output at the first display device in response to the request in association with each other; and
a processor configured to execute,
in a case where a request is made to the device mounted on the vehicle via the operation interface displayed at the first display device,
outputting at the first display device and the second display device, animation in which the first graphic corresponding to the request moves from the first display device to the second display device.

One aspect of the present disclosure is an information processing method to be executed by an in-vehicle system including a first display device that displays an operation interface for making a predetermined request to a device mounted on a vehicle, and a second display device, the information processing method comprising:
a step of storing content of a request made via the operation interface and a first graphic that is a graphic to be output at the first display device in response to the request in association with each other; and
a step of, in a case where a request is made to the device mounted on the vehicle via the operation interface displayed at the first display device, outputting at the first display device and the second display device, animation in which the first graphic corresponding to the request moves from the first display device to the second display device.

Further, another aspect includes a vehicle on which the above-described in-vehicle system is mounted, a program for causing a computer to execute the above-described information processing method, or a computer-readable storage medium storing the program in a non-transitory manner.

According to the present disclosure, it is possible to present display regarding operation performed by a user in a manner easily visible to the user.

### BRIEF DESCRIPTION OF THE DRAWINGS

Fig. 1 is a view illustrating a vehicle interior of a vehicle 1 according to an embodiment.
Fig. 2 is an enlarged view of a steering wheel 4 and therearound.
Fig. 3 is a view illustrating an example of components of the vehicle 1.
Fig. 4 is a view illustrating an example of components of a vehicle ECU 10.
Fig. 5 is a view illustrating a list of screens to be output at an outer display.
Fig. 6A-B are views illustrating an example of a screen to be output at the outer display.
Fig. 7A-D are views illustrating an example of a screen to be output at the outer display.
Fig. 8 is a view illustrating a list of screens to be output at an inner display.
Fig. 9A-B are views illustrating an example of a screen to be output at the inner display.
Fig. 10A-D are views illustrating an example of a screen to be output at the inner display.
Fig. 11 is a flowchart of processing to be executed by an HMI controller 1011.
Fig. 12A-B are views illustrating an example of a first graphic representing in-vehicle equipment.
Fig. 13 is a view illustrating an example of the first graphic representing a character.
Fig. 14 is a view illustrating outline of animation in which the first graphic moves.
Fig. 15A-B are views illustrating an example of a second graphic and a third graphic.
Fig. 16 is a view illustrating a moving speed of the first graphic in a modification of a first embodiment.
Fig. 17 is a view illustrating an example of a display device according to the modification.

### DESCRIPTION OF THE EMBODIMENTS

In recent years, in accordance with sophistication of an automobile, a display for providing information is becoming larger, or the number of displays is increasing.

For example, a method has been proposed in which a large touch panel display is arranged between a driver's seat and a passenger's seat in a front portion of a vehicle cabin, and operation regarding the vehicle and information provision are collectively performed.

However, in such a method, in a case where a driver operates a component provided in the vehicle or confirms output information, a line of sight of the driver largely moves. The movement of the line of sight of the driver is preferably made minimum for safety reasons of traveling of the vehicle.

Typically, a display device such as a liquid crystal is often arranged at a portion at which an instrumental panel has been arranged in related art, in front of the driver's seat, and movement of the line of sight can be made minimum by outputting information at the display device.

However, there is a limit in a size of the display device arranged in a front portion, and all the information necessary for the driver cannot be necessarily displayed. Further, if these kinds of information are output in the same region at the same time, for example, information necessary for traveling of the vehicle and auxiliary information such as entertainment are mixed, which inhibits intuitive information communication.

Further, there is a problem in arrangement of an input interface (also referred to as an operation interface) for operation.

For example, a steering wheel including a cursor key and a push-button switch and enabling input operation while driving is known. However, in such an input interface, layout of buttons, and the like, is fixed, and thus, it is difficult to adapt to a plurality of different targets. For example, while the driver can increase or decrease a set temperature of an air conditioner with two physical keys, the driver cannot directly designate any point on a map with physical keys.

While a mode in which operation is performed through a touch panel is conceivable, as described above, the touch panel display arranged in the front portion in the vehicle cabin is located far from the steering wheel, and thus, the driver largely moves his/her hand in addition to movement of the line of sight.

To solve these problems, a display device enabling input operation through touch is preferably arranged in the vicinity of the steering wheel.

By outputting an input interface for operating in-vehicle equipment such as a wiper and a light at such a display device, it is possible to cause a driver to perform operation to the in-vehicle equipment more safely.

On the other hand, in a case where operation is performed through a touch panel located next to the steering wheel, the driver needs to move his/her line of sight to the display device to confirm the operation result (for example, whether a headlight is turned on), which can cause a safety problem.

Thus, to solve this problem, an in-vehicle system of the present disclosure outputs an input interface at a display device at hand of the driver which is easily operated by the driver and moves content to be displayed in response to the input operation to a display device located at a position easily visible to the driver, from the display device at hand of the driver.

An in-vehicle system according to one embodiment of this disclosure includes a first display device that displays an operation interface for making a predetermined request to a device mounted on a vehicle, and a second display device, the in-vehicle system comprising: a storage configured to store content of a request made via the operation interface and a first graphic that is a graphic to be output at the first display device in response to the request in association with each other; and a processor configured to execute, in a case where a request is made to the device mounted on the vehicle via the operation interface displayed at the first display device, outputting at the first display device and the second display device, animation in which the first graphic corresponding to the request moves from the first display device to the second display device.

The operation interface is a user interface to be used by a user to make a request to the device mounted on the vehicle. For example, the operation interface may include an operation interface for turning on a light, an operation interface for starting or stopping operation of a wiper, an operation interface for adjusting a volume of audio equipment, or the like. The operation interface will be also referred to as an input interface.

The first graphic is graphic content to be displayed in response to the request to the device mounted on the vehicle. For example, in a case where a request for turning on a headlight is made via the operation interface, a graphic representing the headlight in a turned-on state, a graphic of the vehicle in a state where the headlight is turned on, or the like, may be output as the first graphic.

The controller outputs animation in which the first graphic moves from the first display device to the second display device in a case where a request to the device mounted on the vehicle is made via the operation interface.

This enables the in-vehicle system according to one aspect of the present disclosure to present display regarding operation performed by the user in a manner easily visible to the user.

For example, the in-vehicle system according to one aspect of the present disclosure may move a graphic representing a result of the request made via the operation interface from a display device at hand of the driver, to which the operation interface is output, to a display device in a front central portion of the vehicle, such as a meter display which easily comes into view of the driver who is driving.

Note that the first display device may be a display device including a pair of display units arranged at positions on both sides of the steering wheel and including a touch panel, the second display device may be a display device arranged on a vehicle front side of the first display device and in front of the steering wheel.

The first display device is a display device arranged near the hand of the driver. Further, the pair of display units has a configuration that enables touch operation by a touch panel. Still further, for example, the second display device may be a meter display, or the like.

By this means, the in-vehicle system according to one aspect of the present disclosure can move the output graphic from the display device at hand of the driver to the meter display that easily comes into view of the driver who is driving. In other words, the in-vehicle system according to one aspect of the present disclosure can present display regarding operation performed by the user in a manner easily visible to the driver who is driving.

Further, the first graphic may include a second graphic representing a state of the vehicle before the request is reflected, and a third graphic representing a state of the vehicle after the request is reflected, and the controller may output the second graphic as the first graphic before start of the animation and may switch the second graphic to the third graphic after the second graphic is output.

According to such a configuration, the graphic is switched between the graphic representing the state of the vehicle before the request is reflected (for example, a state where the headlight is turned off) and the graphic representing the state of the vehicle after the request is reflected (for example, a state where the headlight is turned on) before and after the animation.

By this means, the in-vehicle system according to one aspect of the present disclosure allows the user to intuitively understand that the request made by the user is reflected.

Further, the device mounted on the vehicle may be in-vehicle equipment to be used to drive the vehicle or for providing information to the user of the vehicle, and the first graphic may be a graphic representing a state of the in-vehicle equipment.

Further, the device mounted on the vehicle may be in-vehicle equipment that enables dialogue with the user of the vehicle in natural language, the request may be a request for starting the dialogue, and the first graphic may be a graphic representing a virtual character who has a dialogue with the user of the vehicle.

Further, a period during animation of the first graphic may include a first period, a second period, and a third period, and the controller may set a moving speed of the first graphic in the period during the animation of the first graphic higher in the second period that comes later than the first period, than the first period and may set the moving speed lower in the third period that comes later than the second period, than the second period.

Further, the controller may set the moving speed of the first graphic such that the period during the animation of the first graphic includes a period during which the first graphic moves while accelerating, and a period during which the first graphic moves while decelerating.

This enables the in-vehicle system according to one aspect of the present disclosure to present a predetermined graphic as if the graphic performed natural movement upon output of animation in which the graphic moves from the display device located closer to the user to the display device located behind. Thus, the in-vehicle system according to one aspect of the present disclosure can implement user experience with less feeling of strangeness.

Embodiments of the present disclosure will be described below based on the drawings. Configurations of the embodiments described below are examples, and the present disclosure is not limited to the configurations of the embodiments.

### (First Embodiment)

Outline of a vehicle system according to an embodiment will be described. The vehicle system according to the present embodiment includes a vehicle 1.

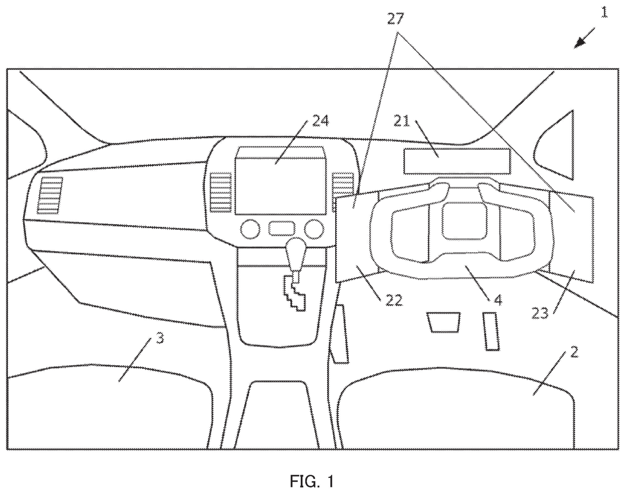

The vehicle 1 will be described with reference to Fig. 1.

Fig. 1 is a view illustrating a vehicle interior of the vehicle 1. As illustrated, a driver's seat 2 and a passenger's seat 3 are provided in a vehicle cabin of the vehicle 1. Note that the vehicle 1 of the present embodiment is a right-hand-drive vehicle, and the driver's seat 2 is provided in a right portion of the vehicle.

A steering wheel 4 is disposed in front of the driver's seat 2. Note that the steering wheel may have a circular shape or may have a U-shape (so-called, irregularly shaped steering wheel) as illustrated.

The steering wheel 4 is connected to a steering device provided in the vehicle 1 via a steering column. The steering column is covered with a column cover.

The passenger's seat 3 is provided on a left side of the driver's seat 2, and a center display 24 is disposed on a vehicle front side at an intermediate position of the driver's seat 2 and the passenger's seat 3. At the center display 24, for example, auxiliary information such as car navigation, content regarding entertainment such as audio and TV, or the like, is displayed.

A meter display 21 is provided on a vehicle front side of the steering wheel 4. The meter display 21 is a full-screen display that is located in front of the driver's seat 2 and provides various kinds of information to the driver of the vehicle 1. At the meter display 21, information necessary for traveling of the vehicle such as, for example, a speed of the vehicle (vehicle speed), an engine speed (in a case where the vehicle 1 includes an engine), a charging and discharging status (in a case where the vehicle 1 includes a battery for driving), and a traveling distance is displayed.

A pair of display devices 27 is provided in front of the driver's seat 2 in the vehicle cabin. The pair of display devices 27 includes touch panel displays respectively arranged at positions on both sides of the steering wheel 4. In the present embodiment, the display arranged on an inner side of the vehicle will be referred to as an inner display, and the display arranged on an outer side of the vehicle will be referred to as an outer display. The inner display 22 and the outer display 23 are connected to an instrument panel of the vehicle 1. One of the inner display 22 and the outer display 23 corresponds to a "pair of display units" in the present disclosure.

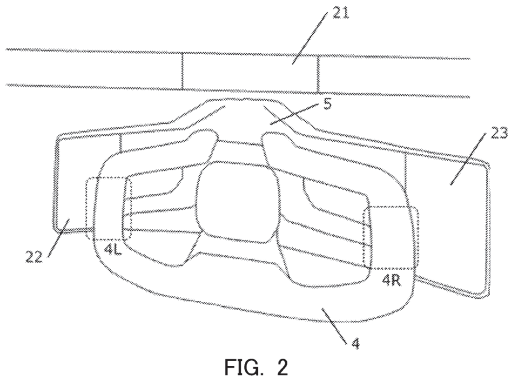

Detailed structures of the inner display 22 and the outer display 23 will be described with reference to Fig. 2.

The inner display 22 and the outer display 23 are vertically long displays and connected to a support portion 5 that is a member that supports the respective displays. The support portion 5 has a shape protruding in a left and right direction of the steering wheel. The outer display 23 is connected to a right end portion of the support portion 5 toward a front portion of the vehicle, and the inner display 22 is connected to a left end portion toward the front portion of the vehicle. By this means, display surfaces of the displays can be arranged in the vicinity of a gripping portion of the steering wheel 4.

Note that the above description is an example in a case where the vehicle 1 is a right-hand-drive vehicle, and in a case where the vehicle 1 is a left-hand-drive vehicle, the right side and the left side are inverted. In other words, the outer display 23 is connected to the left end portion of the support portion 5 toward the front portion of the vehicle, and the inner display 22 is connected to the right end portion toward the front portion of the vehicle.

The support portion 5 may also serve as a column cover that covers the steering column. The support portion 5 has a shape of extending in a left direction and a right direction (vehicle width direction) from a portion at which the steering column penetrates, and each extending toward a rear portion of the vehicle and bending so that an angle of each portion becomes small with respect to the left and right direction of the steering wheel.

Further, the inner display 22 and the outer display 23 are arranged so as to have an angle with respect to the left and right direction of the steering wheel and so as to be inclined toward the steering wheel. In other words, the inner display 22 is arranged so that a portion on the inner side of the vehicle protrudes more to the rear portion of the vehicle, and the outer display 23 is arranged so that a portion on the outer side of the vehicle protrudes more to the rear portion of the vehicle. In this manner, the inner display 22 and the outer display 23 are arranged so as to respectively face the driver.

A region 4R indicated with a dashed line in Fig. 2 is a portion (gripping portion) of the steering wheel 4 to be gripped by the right hand, and a region 4L indicated with a dashed line in Fig. 2 is a portion (gripping portion) of the steering wheel 4 to be gripped by the left hand. By the support portion 5 having the shape described above, positions of the inner display 22 and the outer display 23 in a vehicle front-back direction can be made closer to the gripping portions of the steering wheel 4. Thus, a movement amount of the hand in a case where the driver performs touch operation on the inner display 22 or the outer display 23 during driving can be made smaller.

### [System Configuration]

Configurations of respective devices constituting a vehicle system of the vehicle 1 will be described next.

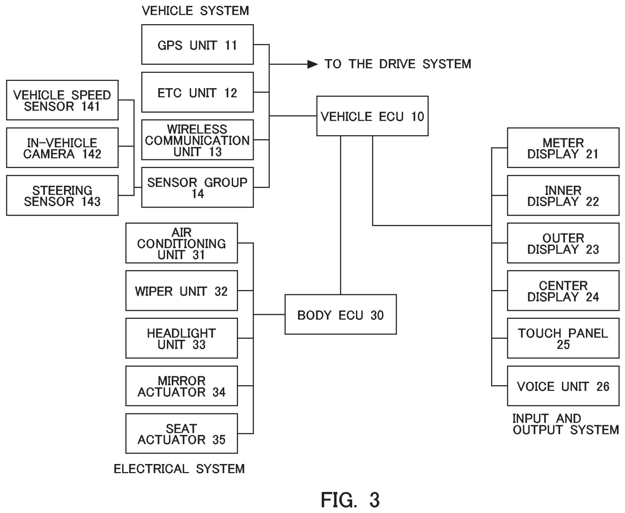

First, components of the vehicle 1 will be described. Fig. 3 is a view schematically illustrating an example of the configuration of the vehicle 1. The vehicle 1 includes a vehicle-related system, an electrical system, and an input/output system.

The vehicle-related system is a system that controls movement of the vehicle 1. The vehicle-related system includes a plurality of components related to traveling of the vehicle.

The input/output system is a system that provides information to an occupant of the vehicle 1 and acquires an input from the occupant. The input/output system includes a plurality of components that inputs/outputs information.

The electrical system is a system that controls electrical components provided in a body of the vehicle. The electrical system includes a plurality of components regarding the electrical components provided in the body of the vehicle.

The components included in each system may include a plurality of electrical components and an ECU that controls the electrical components.

Each of the vehicle ECU 10 and the body ECU 30 can be configured as a computer including a processor (such as a CPU and a GPU), a main memory (such as a RAM and a ROM), and an auxiliary memory (such as an EPROM, a hard disk drive and a removable medium). In the auxiliary memory, an operating system (OS), various kinds of programs, various kinds of tables, and the like, are stored, and each function (software module) that matches a predetermined purpose as will be described later can be implemented by a program stored therein being executed. However, some or all of the functions may be implemented as hardware modules by, for example, a hardware circuit such as an ASIC and an FPGA.

A plurality of components related to traveling of the vehicle is connected to the vehicle ECU 10.

The GPS unit 11 is a unit for acquiring position information of the vehicle 1. The GPS unit 11 includes a GPS antenna and a positioning module for measuring position information. The GPS antenna is an antenna that receives a positioning signal transmitted from a positioning satellite (also referred to as a GNSS satellite). The positioning module is a module that calculates position information based on the signal received by the GPS antenna.

An electronic toll collection system (ETC) unit 12 is a unit to be used for collecting a toll of a toll road through wireless communication. The ETC unit 12 includes an antenna and a communication module.

The wireless communication unit 13 includes an antenna and a communication module for performing wireless communication. The antenna is an antenna element that inputs/outputs a wireless signal. In the present embodiment, the antenna conforms to mobile communication (for example, mobile communication such as 3G, 4G and 5G). Note that the antenna may include a plurality of physical antennas. The communication module is a module for performing mobile communication.

Further, the wireless communication unit 13 may include communication modules other than the communication module for mobile communication. For example, the wireless communication unit 13 may include a communication module through Bluetooth (registered trademark). This enables wireless connection with a user terminal located inside the vehicle, so that it is possible to provide a service (such as, for example, a hands-free call) in coordination with the user terminal.

The sensor group 14 is a collection of a plurality of sensors for acquiring sensor data to be utilized in traveling of the vehicle. The sensors may include a sensor that acquires a physical amount or a sensor that acquires image data, and the like. In the present embodiment, a sensor (vehicle speed sensor 141) that detects a vehicle speed, and an image sensor (in-vehicle camera 142) that acquires an image in front of the vehicle will be exemplified as the sensors.

Note that components (such as, for example, an engine, a motor, a battery, and a transmission) belonging to a drive system may be further connected to the vehicle ECU 10.

A plurality of electrical components included in the vehicle is connected to the body ECU 30.

In the present embodiment, a car air conditioner, a wiper, a headlight, a sideview mirror, and a powered seat will be exemplified as the electrical components included in the vehicle.

An air conditioner unit 31 is a car air conditioner of the vehicle 1. The air conditioner unit 31 includes, for example, a cooling unit, a heating unit, a compressor, a capacitor, and the like. Further, the air conditioner unit 31 may include a controller for controlling these.

A wiper unit 32 includes a front wiper, a rear wiper, a motor for driving these, and the like.

A headlight unit 33 includes a headlight of the vehicle 1, and a unit for driving the headlight. The headlight is, for example, configured to be able to switch between high beam and low beam. Note that in a case where the headlight of the vehicle 1 is an adaptive headlight, it is also possible to control radiation of light based on a command from the body ECU. The headlight unit 33 may further include a taillight, a stop lamp, a direction indicator and/or a unit for driving these.

A mirror actuator 34 includes sideview mirrors disposed at left and right portions of the vehicle 1, and a drive unit for driving the mirrors. Angles of the sideview mirrors can be adjusted upward, downward, leftward, and rightward by the mirror actuator 34.

A seat actuator 35 includes a drive unit for adjusting positions of seats provided in the vehicle 1. Positions, heights, angles, and the like, of seating surfaces and backrests can be adjusted by the seat actuator 35.

A device for inputting/outputting information will be described next.

In the present embodiment, the vehicle 1 includes four displays of the meter display 21, the inner display 22, the outer display 23, and the center display 24 as displays for outputting information.

The meter display 21 is a display arranged in front of the driver, and information regarding the vehicle 1 is output at the meter display 21. While information regarding a state of the vehicle such as, for example, a vehicle speed, an engine speed, a fuel remaining amount, a battery remaining amount, a charging and discharging status, and a traveling distance is mainly output at the meter display 21, information other than this may be output.

The inner display 22 and the outer display 23 are displays arranged on both sides of the steering wheel and including touch panels. As described above, the inner display 22 is arranged on a vehicle center side, and the outer display 23 is arranged on a vehicle outer side.

In a case where the vehicle 1 is a right-hand-drive vehicle, the inner display 22 is arranged on a left side in a traveling direction of the vehicle, and the outer display 23 is arranged on a right side in the traveling direction of the vehicle. In a case where the vehicle 1 is a left-hand-drive vehicle, the inner display 22 is arranged on the right side in the traveling direction of the vehicle, and the outer display 23 is arranged on the left side in the traveling direction of the vehicle.

The center display 24 is a display arranged at the center of the vehicle. The center display 24 is arranged at a place where a display of a car navigation device has been arranged in the related art. At the center display 24, for example, auxiliary information such as car navigation, content regarding entertainment such as audio and TV, and the like, are displayed.

A touch panel 25 is a unit for detecting touch operation performed on the display described above. In the present embodiment, each of the inner display 22, the outer display 23, and the center display 24 includes the touch panel 25, and operation can be performed by touch. The touch panel 25 detects touch operation performed on these displays and transmits detected content to the vehicle ECU 10.

A speech unit 26 is a unit that inputs/outputs information by speech. The speech unit 26 may include, for example, a speaker and a microphone.

A detailed configuration of the vehicle ECU 10 will be described next.

The vehicle ECU 10 is connected to a vehicle-related system and a drive system (powertrain system), and thereby can control the vehicle 1. Further, the vehicle ECU 10 has a function of inputting/outputting information by components included in the input/output system, and a function of controlling an electrical system via the body ECU 30 that controls the electrical system.

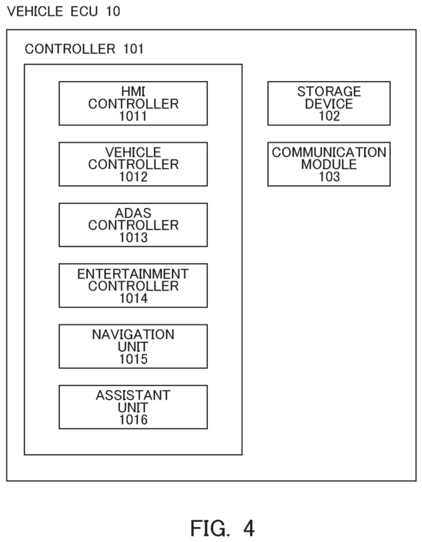

Fig. 4 is a view illustrating a detailed configuration of the vehicle ECU 10.

The vehicle ECU 10 includes a control device 101, a main memory 102, and a communication module 103.

The control device 101 is an arithmetic unit that implements various kinds of functions of the vehicle ECU 10 by executing predetermined programs. The control device 101 can be implemented by, for example, a hardware processor such as a CPU. Further, the control device 101 may include a RAM, a read only memory (ROM), a cache memory, and the like.

In the present embodiment, the control device 101 included in the vehicle ECU 10 includes six software modules of an HMI controller 1011, a vehicle controller 1012, an ADAS controller 1013, an entertainment controller 1014, a navigation unit 1015, and an assistance unit 1016. Each software module may be implemented by the control device 101 (such as a CPU) executing a program stored in a main memory 102 which will be described later. Information processing to be executed by the software module is synonymous with information processing to be executed by the control device 101 (such as the CPU).

The HMI controller 1011 generates a user interface for controlling various kinds of components included in the vehicle and provides the user interface to an occupant of the vehicle via the input/output system. Further, the HMI controller 1011 passes information (for example, a command for implementing control designated by the user) input via the input/output system to the corresponding software module.

This makes it possible to control any component included in the vehicle via the user interface.

Note that in the following description, a command for controlling a component included in the vehicle 1, generated by the user will be referred to as a "user command". For example, a command for changing a temperature of the air conditioner, a command for changing a drive mode, a command for making a telephone call, a command for playing music, or the like, is an example of a "user command".

Note that the component included in the vehicle may be an electrical component such as a headlight and a wiper. Further, the component included in the vehicle may be an in-vehicle computer or a software module (such as, for example, autonomous traveling software and navigation software) to be executed by the in-vehicle computer.

Note that the HMI controller 1011 selects an output destination of the user interface from a plurality of displays (the meter display 21, the inner display 22, the outer display 23, and the center display 24) according to a type of a component to be controlled. A specific configuration will be described later.

The vehicle controller 1012 controls components included in the vehicle-related system or components included in the drive system.

The vehicle controller 1012 may control a target component (for example, a drive motor) based on a command (for example, an acceleration command) received from another component (for example, the ADAS controller 1013 which will be described later) or may control a target component (for example, the headlight unit) based on a user command (for example, a command of turning on the headlight) acquired via the HMI controller 1011.

The ADAS controller 1013 controls an advanced driver-assistance system. The ADAS controller 1013 implements driving assistance such as cruise control, precrash safety, and lane keeping assistance by generating a control command of the vehicle, for example, based on sensor information acquired from the in-vehicle sensor included in the sensor group 14. The ADAS controller 1013, for example, controls the vehicle-related system and the drive system by transmitting a control command to the vehicle controller 1012.

The entertainment controller 1014 performs control regarding entertainment to be provided to the occupant of the vehicle. Examples of a function regarding entertainment can include, for example, an audio function and a TV/radio function.

The navigation unit 1015 provides a car navigation function. The navigation unit 1015 can generate and provide rout guidance of the vehicle based on the position information acquired from the GPS unit 11 and traffic information acquired from the wireless communication unit 13. The navigation unit 1015, for example, may accept designation of a destination and a waypoint of the vehicle and may output information regarding the generated route via the HMI controller 1011.

The assistance unit 1016 provides information to the occupant of the vehicle by executing a language model that enables dialogue in natural language. The language model may be, for example, a large language model (LLM). For example, information can be provided in natural language by executing the LLM having information regarding the occupant of the vehicle. Note that in a case where there is a plurality of occupants of the vehicle, the assistance unit 1016 may acquire language models corresponding to respective occupants via a network and execute any language model.

The main memory 102 is means for storing information and is constituted with a storage medium such as a RAM, a magnetic disc, and a flash memory. In the main memory 102, a program to be executed at the control device 101, data to be utilized by the program, and the like, are stored.

The communication module 103 is a communication interface for connecting the vehicle ECU 10 to a vehicle network. The communication module 103 is configured to be able to perform communication with a component included in the vehicle 1 via a network such as a controller area network (CAN).

Note that components can be omitted, replaced, and added as appropriate in a specific configuration of the vehicle ECU 10 in accordance with embodiments. For example, the control device 101 may include a plurality of hardware processors. The hardware processor may include a microprocessor, an FPGA, a GPU, and the like. Further, an input/output device (such as, for example, an optical drive) other than the exemplified devices may be added. Further, the vehicle ECU 10 may include a plurality of computers. In this case, hardware configurations of the respective computers may be the same or do not have to be the same.

### [Interface Screen to be Provided by HMI Controller]

A user interface to be provided by the HMI controller 1011 will be described next.

The HMI controller 1011 can generate a plurality of types of graphical user interface (GUI) screens and output the graphical user interface screens to the plurality of displays described above.

In the present embodiment, the HMI controller 1011 outputs information while aggregating information regarding control of the vehicle at the outer display 23 and aggregating information regarding convenience and comfortability of the occupant at the inner display 22. This enables the occupant of the vehicle 1 to intuitively recognize a display on which desired information is to be output between the left and right displays. Further, operating surfaces of the touch panels provided on the inner display 22 and the outer display 23 are arranged in the vicinity of the steering wheel. This can minimize a movement amount of the line of sight and the hand of the driver of the vehicle.

The HMI controller 1011 can switch a screen to be output at the outer display 23 among a plurality of types of screens.

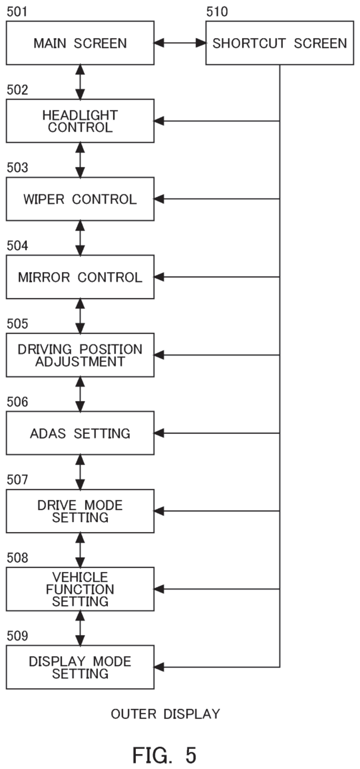

Fig. 5 is a view for describing transition of a plurality of types of screens to be output at the outer display 23. As illustrated, the HMI controller 1011 can output a plurality of screens, mainly, a main screen 501 at the outer display 23.

### (1) Main Screen 501

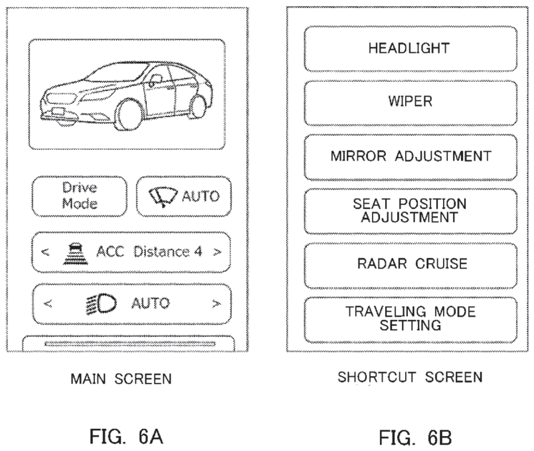

The main screen 501 is a screen to be normally displayed at the outer display during traveling. Fig. 6A is a view illustrating an example of the main screen 501. Display content of the main screen can be customized by the user.

### (2) Headlight Control Screen 502

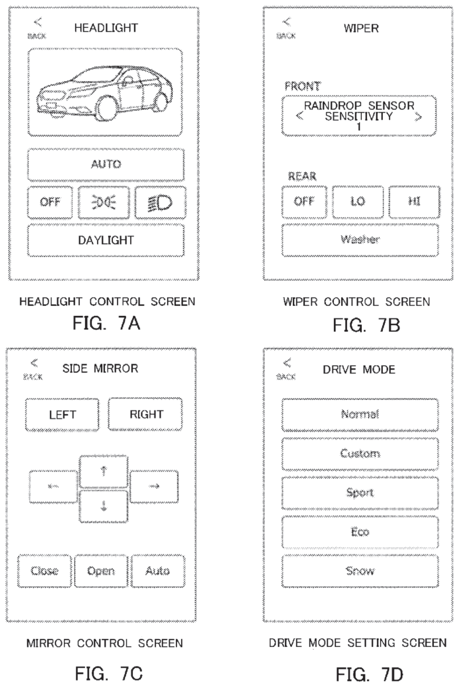

A headlight control screen 502 is a screen for setting a lighting state of the headlight included in the vehicle 1. Fig. 7A is a view illustrating an example of the headlight control screen 502.

On the headlight control screen 502, the lighting state (such as automated, turned-on, turned-off, parking light, and daylight) of the headlight can be selected. The vehicle controller 1012 controls the headlight unit 33 by generating a user command based on touch operation acquired via the HMI controller 1011 and transmitting the user command to the body ECU 30.

Further, the vehicle controller 1012 may acquire data indicating the lighting state of the headlight from the body ECU 30 and reflect the lighting state on the screen via the HMI controller 1011. For example, the vehicle controller 1012 may reflect a current lighting state of the headlight on a graphic of the vehicle drawn on the screen.

### (3) Wiper Control Screen 503

A wiper control screen 503 is a screen for setting an operating state of the wiper (front/rear) included in the vehicle 1. Fig. 7B is a view illustrating an example of the wiper control screen 503.

On the wiper control screen 503, an operating state (such as stopped, automated operation, intermittent operation, and continuous operation) of the wiper can be selected. The vehicle controller 1012 controls the wiper unit 32 by generating a user command based on the touch operation acquired via the HMI controller 1011 and transmitting the user command to the body ECU 30.

Further, the vehicle controller 1012 may acquire data indicating the operating state of the wiper from the body ECU 30 and reflect the operating state on the screen via the HMI controller 1011. For example, the vehicle controller 1012 may reflect a current operating state of the wiper on the graphic of the vehicle drawn on the screen.

### (4) Mirror Control Screen 504

A mirror control screen 504 is a screen for adjusting an expanded state and an angle of the sideview mirror included in the vehicle 1. Fig. 7C is a view illustrating an example of the mirror control screen 504.

On the mirror control screen 504, a state (stored/expanded state and an angle) of the sideview mirror can be selected. The vehicle controller 1012 controls the mirror actuator 34 by generating a user command based on the touch operation acquired via the HMI controller 1011 and transmitting the user command to the body ECU 30.

Further, the vehicle controller 1012 may acquire data indicating the state of the sideview mirror from the body ECU 30 and reflect the operating state on the screen via the HMI controller 1011. For example, the vehicle controller 1012 may reflect a current expanded/stored state of the sideview mirror on the graphic of the vehicle drawn on the screen.

### (5) Driving Position Adjustment Screen 505

A driving position adjustment screen 505 is a screen for adjusting a position/angle of the seat (a seating surface and a backrest) included in the vehicle 1 and a position/angle of the steering wheel.

On the driving position adjustment screen 505, positions and angles of the seat and the steering wheel can be set. The vehicle controller 1012 controls the seat actuator 35, and the like, by acquiring via the HMI controller 1011, the touch operation acquired via the HMI controller 1011, generating a user command based on the touch operation and transmitting the user command to the body ECU 30.

### (6) ADAS Setting Screen 506

An ADAS setting screen 506 is a screen for making a notification of an operating state of the advanced driver-assistance system included in the vehicle 1 and making settings.

For example, in a case where the advanced driver-assistance system included in the vehicle 1 includes an autocruise function, the user of the vehicle 1 can set a cruising speed, a distance between vehicles, whether or not to follow the preceding vehicle, whether or not to trace a lane, and the like, via the ADAS setting screen 506.

The information included in the ADAS setting screen 506 can be generated by the ADAS controller 1013.

### (7) Drive Mode Setting Screen 507

A drive mode setting screen 507 is a screen for setting a drive mode of the vehicle 1. Fig. 7D is a view illustrating an example of the drive mode setting screen 507.

For example, the user of the vehicle 1 can select a mode from a plurality of modes such as a normal mode, a sports mode, an energy saving mode, and a snow mode via the drive mode setting screen 507. The vehicle controller 1012 changes the drive mode of the vehicle based on the selection.

### (8) Vehicle Function Setting Screen 508

A vehicle function setting screen 508 is a screen for utilizing other functions of the vehicle 1. Examples of other functions of the vehicle 1 can include, for example, opening/closing of an electric rear door, adjustment of a suspension, and the like.

### (9) Display Mode Setting Screen 509

A display mode setting screen 509 is a screen for setting a type, and the like, of information to be displayed at the meter display 21. For example, in a case where a plurality of kinds of information other than a speed can be displayed at the meter display 21, the user of the vehicle 1 can customize information to be displayed at the meter display 21 via the display mode setting screen 509.

A screen can be switched among the plurality of screens as exemplified above by, for example, predetermined operation such as horizontal swipe being performed on, for example, the touch panel provided on the outer display 23.

Further, the HMI controller 1011 can display a shortcut screen 510 for jumping to each screen on the outer display 23. Fig. 6B is a view illustrating an example of the shortcut screen 510. The shortcut screen can be called by, for example, predetermined operation (for example, operation of swiping upward from a lower portion of the screen) being performed on each screen including the main screen 501. On the shortcut screen 510, a plurality of interfaces (for example, buttons) for transitioning to the respective screens is arranged, and the screen can move to a target screen by operation being performed on the interface.

In this manner, the HMI controller 1011 aggregates and outputs at the outer display 23 at least information regarding control of the vehicle.

The information regarding control of the vehicle is typically information related to traveling control of the vehicle. Examples of the information related to traveling control of the vehicle can include, for example, information for controlling components belonging to the vehicle-related system, information for controlling components belonging to the drive system, and the like. Further, information for controlling components necessary for causing the vehicle to appropriately travel such as a light and a wiper among components belonging to the electrical system can be also regarded as information related to traveling control of the vehicle.

Note that information not directly related to traveling control of the vehicle can be also output at the outer display 23 if the information is related to control of the vehicle. For example, information for controlling an electric door included in the vehicle may be output at the outer display 23.

In a similar manner, the HMI controller 1011 can switch a screen to be output at the inner display 22 among a plurality of types of screens.

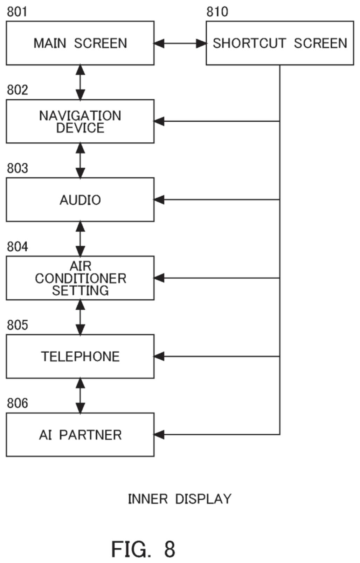

Fig. 8 is a view for describing transition of the plurality of types of screens to be output at the inner display 22. As illustrated, the HMI controller 1011 can output a plurality of screens, mainly a main screen 801, at the inner display 22.

### (1) Main Screen 801

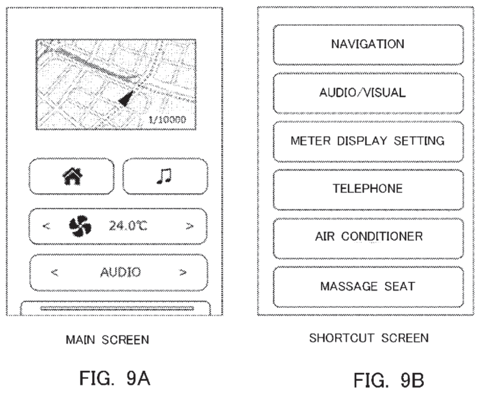

The main screen 801 is a screen to be normally displayed at the inner display during traveling. Fig. 9A is a view illustrating an example of the main screen 801. Display content of the main screen can be customized by the user.

### (2) Navigation Screen 802

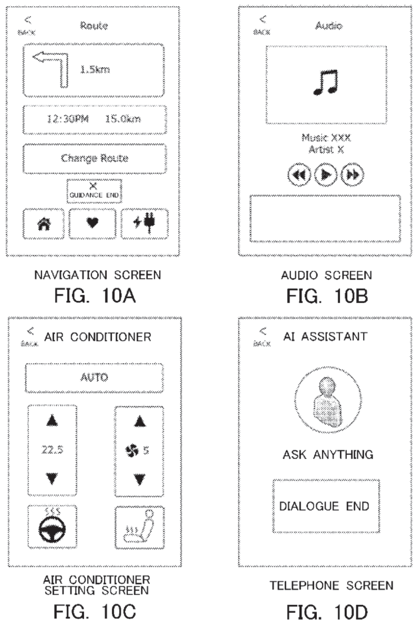

A navigation screen 802 is a screen related to car navigation. Fig. 10A is a view illustrating an example of the navigation screen 802. Information included in the navigation screen 802 is generated by the navigation unit 1015.

Note that in a case where map information in the car navigation is displayed at the center display 24, auxiliary information regarding a route of the vehicle 1 may be output at the navigation screen 802. Examples of the auxiliary information regarding the route can include, for example, guidance of a point at which the vehicle should turn right/left next, or the like, estimated time of arrival, a distance to go, and the like.

Further, part of the information displayed at the center display 24 and the user interfaces may be included in the navigation screen 802.

For example, user interfaces with high usage frequencies such as a button for starting rout guidance to home, a button for calling a bookmark, and a button for starting rout guidance to a charging spot can be arranged on the navigation screen 802.

### (3) Audio Screen 803

An audio screen 803 is a screen related to an audio function of the vehicle 1. Fig. 10B is a view illustrating an example of the audio screen 803. Information included in the audio screen 803 is generated by the entertainment controller 1014. The entertainment controller 1014 can acquire and play music via a network or a medium. The audio screen 803 can include information regarding music that is being played and an interface for selecting music.

### (4) Air Conditioner Setting Screen 804

An air conditioner setting screen 804 is a screen for controlling the car air conditioner included in the vehicle 1. Fig. 10C is a view illustrating an example of the air conditioner setting screen 804.

On the air conditioner setting screen 804, a temperature and airflow of the car air conditioner, and an air conditioning device (such as a steering heater, a seat heater and a defroster) to be operated can be set. The vehicle controller 1012 controls the air conditioner unit 31, and the like, by generating a user command based on operation performed on the screen and transmitting the user command to the body ECU 30.

Note that the car air conditioner is equipment of the vehicle 1 to be controlled by an external command, but is related to comfortability of the occupant, and thus, the air conditioner setting screen 804 is displayed at the inner display 22 instead of being displayed at the outer display 23.

### (5) Phone Screen 805

A phone screen 805 is a screen for wirelessly connecting to the user terminal and making a hands-free call. In a case where the wireless communication unit 13 includes a module for performing wireless communication with the user terminal, it is possible to make a phone call (or receive an incoming call), or the like, from the user terminal via the module.

### (6) AI partner screen 806

An AI partner screen 806 is a screen for having a dialogue with a virtual agent (AI partner) with which the occupant can have a dialogue in natural language. Fig. 10D is a view illustrating an example of the AI partner screen 806. The screen includes a character of the virtual agent, and the occupant of the vehicle can obtain information by having a dialogue with the character. A dialogue service in natural language is provided by the assistance unit 1016.

The AI partner screen 806 may include an interface for giving an instruction to the agent. Note that in a case where there is a plurality of occupants of the vehicle, the assistance unit 1016 may be configured to be able to execute any agents corresponding to respective persons. The AI partner screen 806 may include an interface for starting and ending a dialogue with the agent, an interface for switching the agent, and the like.

Further, the assistance unit 1016 has a function of, in a case where there is an inquiry about a building and an object (hereinafter, referred to as an "object") located outside the vehicle from the user, accepting designation of the object by the user and specifying the object. Further, the assistance unit 1016 has a function of acquiring information regarding the specified object from an external device and providing the information to the user.

For example, in a case where there is an inquiry of "What is the mountain on the left side?" from the user by speech, the assistance unit 1016 specifies the object and provides information regarding the object to the user with a speech message or the like, such as "That is Mountain AA which is XX meters high". Designation of the object or provision of the information regarding the specified object may be performed on the inner display 22 or the outer display 23. A specific method for designating the object will be described later.

The plurality of screens as exemplified above can be switched by predetermined operation such as, for example, horizontal swipe being performed on, for example, the touch panel provided on the inner display 22.

Further, the HMI controller 1011 can cause a shortcut screen 810 for jumping to each screen to be displayed on the inner display 22. Fig. 9B is a view illustrating an example of the shortcut screen 810. The shortcut screen can be called by, for example, predetermined operation (for example, operation of swiping upward from a lower portion of the screen) being performed on each screen including the main screen 801. On the shortcut screen 810, a plurality of interfaces (for example, buttons) for transitioning to the respective screens is arranged, and the screen can transition to a target screen by operation being performed on the interface.

In this manner, the HMI controller 1011 aggregates and outputs at the inner display 22 information regarding convenience and comfortability of the occupant.

Note that information regarding a component such as a car air conditioner, which constitutes part of the vehicle but is related to convenience or comfortability of the occupant, may be output at the inner display 22 without being handled as information related to control of the vehicle.

In this manner, in a case where target information is applicable to both information regarding control of the vehicle and information regarding convenience (or comfortability) of the occupant, the HMI controller 1011 may selectively output one of the inner display 22 and the outer display 23 for the information in accordance with predetermined standards.

Further, the HMI controller 1011 may output an input interface, or the like, regarding operation of in-vehicle equipment having the functions (1) to (6) described above at the inner display 22 or the outer display 23.

### [Output Method of Display Content]

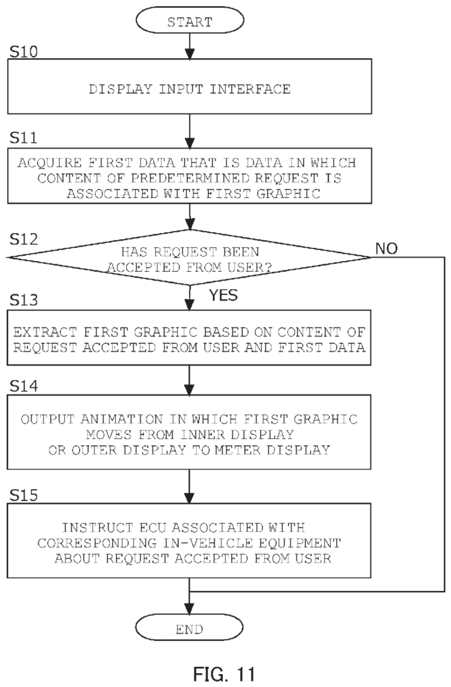

Next, output processing of display content in association with operation via the input interface will be described. Fig. 11 is a flowchart of processing to be executed by the HMI controller 1011. The processing indicated in Fig. 11 is executed when operation of calling a screen such as the headlight control screen 502, including an input interface for operation of in-vehicle equipment is performed. Note that the input interface for operation of in-vehicle equipment is not limited to an input interface included in the headlight control screen 502 and may be an input interface included in the wiper control screen 503, the audio screen 803, the air conditioner setting screen 804, the phone screen 805, the AI partner screen 806, or the like.

First, in step S10, the HMI controller 1011 displays a corresponding input interface. Specifically, the HMI controller 1011 outputs an input interface (also referred to as an operation interface) for making a request to a device mounted on the vehicle (hereinafter, referred to as in-vehicle equipment) at the inner display 22 or the outer display 23.

In step S11, the HMI controller 1011 acquires first data. The first data is data in which content of a predetermined request to the in-vehicle equipment made via the input interface is associated with a first graphic 40 that is a graphic to be output at the inner display 22 or the outer display 23 in response to the request. Here, the HMI controller 1011 acquires the data from the main memory 102. Note that the main memory 102 is a specific example of a "storage".

The first graphic 40 is a graphic to be output in response to a request to the in-vehicle equipment and typically a graphic representing a state of the in-vehicle equipment.

The first graphic 40 includes at least a graphic representing a result of the request made by the user to the in-vehicle equipment. The first graphic 40 may be a graphic indicating a state after the request is reflected or may be a pair of a graphic representing a state before the request is reflected and the graphic representing the state after the request is reflected. In the latter case, the HMI controller 1011 can display the graphic while switching the graphic between the graphic representing the state before the request is reflected on the in-vehicle equipment and the graphic representing the state after the request is reflected on the in-vehicle equipment. The latter case will be described in detail later.

The in-vehicle equipment to which the request is to be made may be in-vehicle equipment such as a wiper or a light to be used for driving of the vehicle, or in-vehicle equipment such as audio equipment, in-vehicle phone or a car navigation device for providing information to the user of the vehicle.

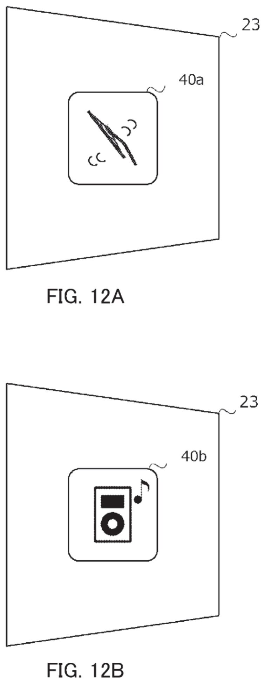

Fig. 12A-B are views illustrating an example of first graphics 40a, 40b representing the in-vehicle equipment. For example, a graphic indicating a state where the wiper is operating as illustrated in Fig. 12A is associated with a request for starting operation of the wiper. Further, a graphic indicating a state where the wiper is stopped may be associated with a request for stopping operation of the wiper.

Further, a graphic indicating a state where the audio equipment is playing sound as illustrated in Fig. 12B is associated with a request for starting operation of the audio equipment. Still further, a graphic indicating a state after the request is reflected may be associated with each of a request for stopping operation of the audio equipment, a request for adjusting a volume, or the like.

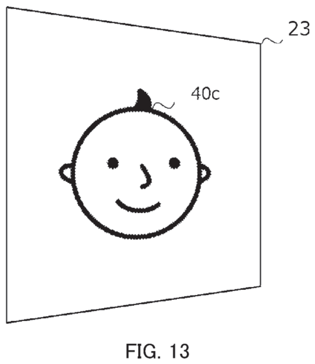

Fig. 13 is a view illustrating an example of a first graphic 40c representing a character. The in-vehicle equipment may be in-vehicle equipment capable of having a dialogue with the user of the vehicle 1 in natural language, and a graphic representing a virtual character that is having a dialogue with the user of the vehicle 1 may be associated with a request for starting a dialogue from the user to the in-vehicle equipment.

In step S12, the HMI controller 1011 determines whether or not a request to the in-vehicle equipment is accepted from the user via the input interface. In a case where the HMI controller 1011 determines that a request to the in-vehicle equipment is accepted from the user via the input interface, a positive determination result is obtained in the present step.

In a case where a positive determination result is obtained in the present step, the processing transitions to step S13.

In a case where a negative determination result is obtained in the present step, the processing ends.

In a case where the processing transitions to step S13, the HMI controller 1011 extracts the first graphic 40 corresponding to content of the request from first data based on the content of the request to the in-vehicle equipment accepted from the user in step S12.

In step S14, the HMI controller 1011 outputs animation in which the first graphic 40 moves to the meter display from the inner display 22 or the outer display 23.

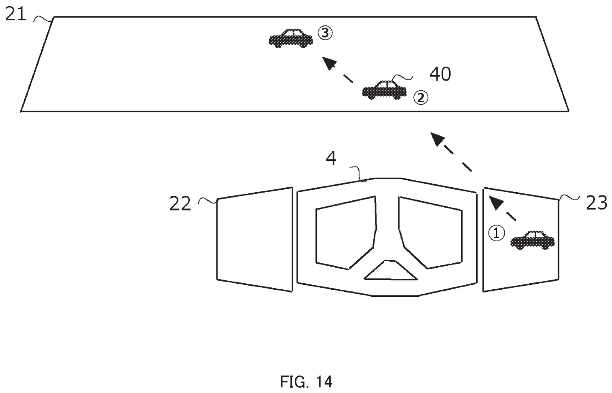

Fig. 14 is a view illustrating outline of the animation in which the first graphic 40 moves. It is assumed here that the input interface for making a request to the in-vehicle equipment is output at the outer display 23, and operation of making a request to the in-vehicle equipment (for example, operation of turning on the headlight) is performed on the outer display 23. First, the HMI controller 1011 outputs the first graphic 40 (for example, a graphic of the vehicle in a state where the headlight is turned on) corresponding to content of the request input to the input interface at the outer display 23. Then, the HMI controller 1011 outputs animation in which the first graphic 40 moves toward the meter display 21 on the outer display 23. If the first graphic 40 reaches an end on the screen of the outer display 23, the HMI controller 1011 stops outputting the first graphic 40 at the outer display 23 and outputs the first graphic 40 at a position on an extension of a trajectory of the first graphic 40 so far, at the meter display 21. Then, the HMI controller 1011 outputs animation in which the first graphic 40 moves on the extension of the trajectory on the meter display 21.

Note that the input interface for making a request to the in-vehicle equipment may be output at the inner display 22, and animation in which the first graphic 40 moves from the inner display 22 to the meter display 21 may be output. Further, also in a case where the input interface is output at the inner display 22, the first graphic 40 may be output at the outer display 23, or inversely, also in a case where the input interface is output at the outer display 23, the first graphic 40 may be output at the inner display 22.

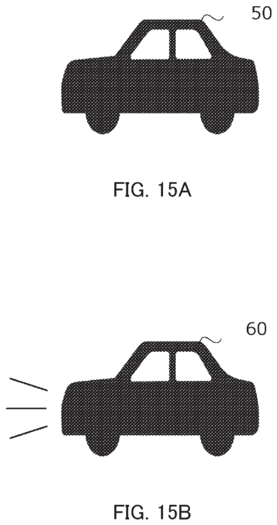

Note that while in the above description, a graphic representing a result of a request made to the in-vehicle equipment has been exemplified as the first graphic 40, the first graphic 40 may be a pair of two graphics of a second graphic 50 representing a state of the vehicle 1 before the request to the in-vehicle equipment is reflected, and a third graphic 60 representing a state of the vehicle 1 after the request is reflected. In this case, the HMI controller 1011 can selectively output the second graphic 50/the third graphic 60 (that is, switch the graphic) as the first graphic while animation is displayed. Fig. 15A-B are views illustrating examples of the second graphic 50 and the third graphic 60.

For example, a case will be considered where the user makes a request for turning on the headlight of the vehicle via the input interface. As illustrated in Fig. 15A, the HMI controller 1011 first outputs the second graphic 50 that is a graphic indicating a state of the vehicle before the headlight is turned on as the first graphic 40. Then, after outputting the second graphic 50, the HMI controller 1011 switches the graphic to be output as the first graphic 40 from the second graphic 50 to the third graphic 60 that is a graphic representing a state of the vehicle after the headlight is turned on.

Further, in a case where the user makes a request for starting operation of the wiper of the vehicle via the input interface, the HMI controller 1011 may output a graphic indicating a state of the vehicle before operation of the wiper is started, and then, switch the graphic to a graphic after the operation of the wiper is started.

Further, in a case where the user makes a request for starting playing back audio content via the input interface, the HMI controller 1011 may output a graphic indicating a state where playback of the audio content is not performed and then switch the graphic to a graphic indicating that the audio content is being played back.

Note that switching between the second graphic 50 and the third graphic 60 may be performed before the animation is started, while the animation is being output or after the animation is completed.

For example, in a case where the user makes a request for turning on the headlight, the HMI controller 1011 may output the second graphic 50 that is a graphic representing a state where the headlight of the vehicle 1 is turned off, switch the second graphic 50 to the third graphic 60 and then output animation in which the third graphic 60 moves.

Alternatively, the HMI controller 1011 may output the second graphic 50 that is a graphic representing a state before the headlight of the vehicle 1 is turned on, output animation in which the second graphic 50 moves, and then, switch the second graphic 50 to the third graphic 60 that is a graphic representing a state after the headlight of the vehicle 1 is turned on.

In step S15, the vehicle controller 1012 instructs the body ECU 30 to reflect the request accepted by the HMI controller 1011 from the user via the input interface on the in-vehicle equipment. Instead of being limited to the body ECU 30, the vehicle controller 1012 may instruct another ECU associated with the in-vehicle equipment corresponding to the request to reflect the request on the in-vehicle equipment.

Note that the vehicle controller 1012 may reflect the request accepted from the user on the in-vehicle equipment after the HMI controller 1011 outputs the animation of the first graphic 40 or may reflect the request accepted from the user on the in-vehicle equipment before the HMI controller 1011 outputs the animation of the first graphic 40.

As described above, in a case where the user makes a request to the in-vehicle equipment, the vehicle ECU 10 in the present embodiment outputs the animation in which the graphic corresponding to the in-vehicle equipment moves from a display device at hand of the user to a display device located at the front central portion of the vehicle.

According to such a configuration, the in-vehicle system according to one aspect of the present disclosure can present display regarding operation performed by the user in a manner easily visible to the user.

### (Modification of First Embodiment)

In the first embodiment, in a case where the user makes a request to the in-vehicle equipment, animation in which the graphic corresponding to the in-vehicle equipment moves from the display device at hand of the user toward the display device at the front central portion of the vehicle at a single speed is output. However, in a case where the graphic to be output imitates the vehicle, if the graphic moves at a single speed, there is a case where a sense of strangeness may be provided to the user.

Thus, in a modification of the first embodiment, in the animation in which the first graphic moves from the display device at hand of the user toward the display device at the front central portion of the vehicle, a moving speed of the graphic is varied.

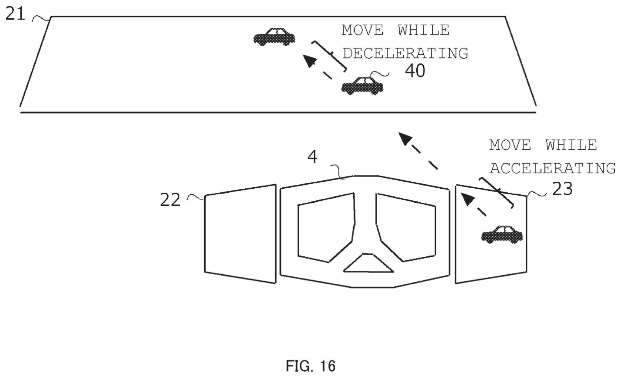

Fig. 16 is a view illustrating the moving speed of the first graphic 40 in the modification of the first embodiment. The HMI controller 1011 may set the moving speed of the first graphic 40 such that a period during which the animation in which the first graphic 40 moves is output includes a period during which the first graphic 40 moves while accelerating and a period during which the first graphic 40 moves while decelerating.

Further, for example, the HMI controller 1011 may divide the period during which the animation in which the first graphic 40 moves is output into a first period, a second period, and a third period, sequentially. Then, the HMI controller 1011 may set a moving speed of the first graphic 40 higher in the second period than the moving speed of the first graphic 40 in the first period. Further, the HMI controller 1011 may set the moving speed of the first graphic 40 lower in the third period than the moving speed of the first graphic 40 in the second period. In other words, the first period may be set as a period during which the graphic accelerates, the second period may be set as a period during which the graphic moves at a constant speed, and the third period may be set as a period during which the graphic decelerates.

Note that setting of the moving speeds of the first graphic 40 in the first period, the second period, and the third period is not limited to the above. The HMI controller 1011 may gradually increase the moving speed of the first graphic 40 or may gradually decrease the moving speed of the first graphic 40 from the first period toward the third period.

Further, the period during which the animation in which the first graphic 40 moves is output does not necessarily have to be divided into three periods. The period during which animation in which the first graphic 40 moves is output may be divided into two or less or four or more periods.

As described above, in the present modification, the vehicle ECU 10 varies a moving speed of a predetermined graphic upon output of animation in which the predetermined graphic moves from the display device at hand of the user toward the display device at the front central portion of the vehicle.

According to such a configuration, it is possible to display animation of a predetermined graphic with natural sophisticated motion.

### (Other modifications)

The above-described embodiment is merely an example, and the present disclosure can be changed as appropriate within a range not deviating from the gist of the present disclosure.

For example, the processing and the means described in the present disclosure can be freely combined and implemented unless technical inconsistencies arise.

Further, while in the embodiment, a configuration has been described where the meter display 21, the inner display 22, and the outer display 23 are independent of each other, the respective displays do not necessarily have to be physically independent.

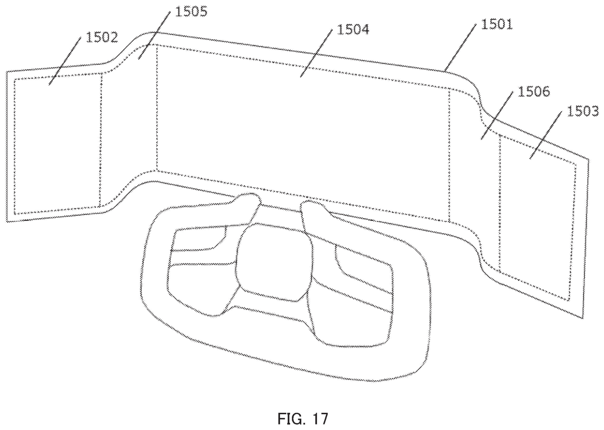

For example, as illustrated in Fig. 17, the meter display 21, the inner display 22, and the outer display 23 may be implemented with one display 1501. In the example in Fig. 17, the display 1501 has three display regions (display portions) indicated with reference numerals 1502, 1503, and 1504. Each of the three display regions is a flat surface and has a structure in which portions between the display regions are curved.

In the illustrated example, the display region 1502 functions as the inner display 22, and the display region 1503 functions as the outer display 23 (in a case of a right-hand-drive vehicle). Further, the display region 1504 functions as the meter display 21.

While an image can be displayed in a region (reference numeral 1505) connecting the display regions 1502 and 1504, and a region (reference numeral 1506) connecting the display regions 1503 and 1504, the regions are physically curved and distortion occurs, and thus, are not used as display portions in normal aspects.

However, in a case where animation in which the first graphic 40 moves from the inner display 22 or the outer display 23 to the meter display 21 is provided, display of the graphic during movement is interrupted if the regions (hereinafter, connection regions) indicated with the reference numerals 1505 and 1506 are not used, and there is a possibility that a sense of strangeness may be provided to the user. Thus, only in a case where the animation of the first graphic 40 is displayed, the connection regions may be used as display portions. In other words, the HMI controller 1011 may output animation in which the first graphic 40 passes through the connection regions.

Further, the processing described as being performed by one device may be shared and executed by a plurality of devices. Alternatively, the processing described as being performed by different devices may be executed by one device. In a computer system, hardware components (server components) that implement respective functions can be flexibly changed.

Further, the in-vehicle equipment on which the request from the user is to be reflected may include advanced safety features of the vehicle 1. For example, in a case where the user inputs various kinds of settings, and the like, on a screen regarding the advanced safety features of the vehicle 1, the HMI controller 1011 may output animation of the first graphic 40 corresponding to the advanced safety features.

The present disclosure can be also implemented by a computer program implementing the functions described in the above embodiments being supplied to a computer, and one or more processors included in the computer reading and executing the program. Such a computer program may be provided to the computer by a non-transitory computer-readable storage medium that can be connected to a system bus of the computer or may be provided to the computer via a network. The non-transitory computer-readable storage medium includes, for example, any type of disc such as a magnetic disc (such as a Floppy (registered trademark) disc and a hard disc drive (HDD)), and an optical disc (such as a CD-ROM, a DVD disc and a Blu-ray disc), and any type of medium appropriate for storing an electronic command such as a read only memory (ROM), a random access memory (RAM), an EPROM, an EEPROM, a magnetic card, a flash memory, and an optical card.

## Claims

1. An in-vehicle system including a first display device that displays an operation interface for making a predetermined request to a device mounted on a vehicle (1), and a second display device, the in-vehicle system comprising:
a storage configured to store content of a request made via the operation interface and a first graphic (40) that is a graphic to be output at the first display device in response to the request in association with each other; and
a processor configured to execute,
in a case where a request is made to the device mounted on the vehicle (1) via the operation interface displayed at the first display device,
outputting at the first display device and the second display device, animation in which the first graphic (40) corresponding to the request moves from the first display device to the second display device.

2. The in-vehicle system according to claim 1, wherein
the first display device is a display device including a pair of display units arranged at positions on both sides of a steering wheel (4) and including a touch panel (25), and
the second display device is a display device arranged on a vehicle (1) front side of the first display device and in front of the steering wheel (4).

3. The in-vehicle system according to claim 1, wherein the first graphic (40) includes a second graphic (50) representing a state of the vehicle (1) before the request is reflected, and a third graphic (60) representing a state of the vehicle (1) after the request is reflected, and
the processor is configured to execute outputting the second graphic (50) as the first graphic (40) before the animation is started, and
switching the second graphic (50) to the third graphic (60) after the second graphic (50) is output.

4. The in-vehicle system according to claim 1, wherein
the device mounted on the vehicle (1) is in-vehicle equipment to be used for driving of the vehicle (1) or for providing information to a user of the vehicle (1), and
the first graphic (40) is a graphic representing a state of the in-vehicle equipment.

5. The in-vehicle system according to claim 1, wherein
the device mounted on the vehicle (1) is in-vehicle equipment capable of having a dialogue with a user of the vehicle (1) in natural language,
the request is a request for starting a dialogue, and
the first graphic (40) is a graphic expressing a virtual character that has a dialogue with the user of the vehicle (1).

6. The in-vehicle system according to claim 1, wherein
a period during animation of the first graphic (40) includes a first period, a second period, and a third period, and
the processor is configured to execute setting a moving speed of the first graphic (40) in a period during the animation of the first graphic (40) higher in the second period that comes later than the first period, than in the first period and lower in the third period that comes later than the second period, than in the second period.

7. The in-vehicle system according to claim 1, wherein the processor is configured to execute setting a moving speed of the first graphic (40) such that a period during animation of the first graphic (40) includes a period during which the first graphic (40) moves while accelerating and a period during which the first graphic (40) moves while decelerating.

8. A vehicle (1) with the in-vehicle system according to any one of claims 1 to 7.

9. An information processing apparatus included in an in-vehicle system including a first display device that displays an operation interface for making a predetermined request to a device mounted on a vehicle (1), and a second display device, the information processing apparatus comprising:
a storage configured to store content of a request made via the operation interface and a first graphic (40) that is a graphic to be output at the first display device in response to the request in association with each other; and
a processor configured to execute,
in a case where a request is made to the device mounted on the vehicle (1) via the operation interface displayed at the first display device,
outputting at the first display device and the second display device, animation in which the first graphic (40) corresponding to the request moves from the first display device to the second display device.

10. The information processing apparatus according to claim 9, wherein
the first display device is a display device including a pair of display units arranged at both sides of a steering wheel (4) and including a touch panel (25), and
the second display device is a display device arranged on a vehicle (1) front side of the first display device and in front of the steering wheel (4).

11. The information processing apparatus according to claim 9, wherein
the first graphic (40) includes a second graphic (50) representing a state of the vehicle (1) before the request is reflected, and a third graphic (60) representing a state of the vehicle (1) after the request is reflected, and
the processor is configured to execute outputting the second graphic (50) as the first graphic (40) before the animation is started, and
switching the second graphic (50) to the third graphic (60) after the second graphic (50) is output.

12. The information processing apparatus according to claim 9, wherein
the device mounted on the vehicle (1) is in-vehicle equipment to be used for driving of the vehicle (1) or for providing information to a user of the vehicle (1), and
the first graphic (40) is a graphic expressing a state of the in-vehicle equipment.

13. The information processing apparatus according to claim 9, wherein
the device mounted on the vehicle (1) is in-vehicle equipment capable of having a dialogue with a user of the vehicle (1) in natural language,
the request is a request for starting a dialogue, and
the first graphic (40) is a graphic expressing a virtual character that has a dialogue with the user of the vehicle (1).

14. An information processing method to be executed by an in-vehicle system including a first display device that displays an operation interface for making a predetermined request to a device mounted on a vehicle (1), and a second display device, the information processing method comprising:
a step of storing content of a request made via the operation interface and a first graphic (40) that is a graphic to be output at the first display device in response to the request in association with each other; and
a step of, in a case where a request is made to the device mounted on the vehicle (1) via the operation interface displayed at the first display device, outputting at the first display device and the second display device, animation in which the first graphic (40) corresponding to the request moves from the first display device to the second display device.

15. A program for executing the information processing method according to claim 14.
